Europäisches Patentamt

European Patent Office

Office européen des brevets

(11) Publication number: 0 599 271 A1

# EUROPEAN PATENT APPLICATION

(21) Application number: 93118827.0

(51) Int. Cl.5: B01D 53/36

(22) Date of filing: 23.11.93

(30) Priority: 25.11.92 US 981586

(43) Date of publication of application:
01.06.94 Bulletin 94/22

(84) Designated Contracting States:
BE DE ES FR GB IT NL

(71) Applicant: AIR PRODUCTS AND CHEMICALS, INC.
7201 Hamilton Boulevard
Allentown, PA 18195-1501(US)

(72) Inventor: Sircar, Shivaji
1508 Bogie Avenue
Wescosville, PA 18106(US)
Inventor: Asbury Manuel, Thomas
2922 Greenbriar Lane
Allentown, PA 18103(US)

(74) Representative: Kador & Partner
Corneliusstrasse 15
D-80469 München (DE)

(54) Process for removing and destroying low concentrations of oxidizable organic contaminants from a gas stream.

(57) A process is set forth for removing and destroying low concentrations of oxidizable organic contaminants from a gas stream. The process comprises adsorbing the contaminants onto an adsorbent followed by an in situ catalytic oxidation of the contaminants into innocuous products. A key feature of the process is that it provides for water removal and oxygen enrichment throughout the desorption/oxidation of the contaminants.

FIG. 1

## TECHNICAL FIELD

The present invention relates to a process for removing and destroying low concentrations of oxidizable organic contaminants from a gas stream by adsorbing the contaminants onto an adsorbent followed by an in situ catalytic oxidation of the contaminants into innocuous products.

## BACKGROUND OF THE INVENTION

Recent clean air regulations require that the emissions of several different (about 200) oxidizable organic contaminants into the atmosphere must be controlled within specific limits. Consequently, air or other gaseous effluents containing these contaminants must be treated before they are vented.

Depending on the specific contaminant, recovery of the contaminant (as opposed to its removal and destruction) only makes economic sense when the contaminant concentration exceeds generally between 0.01% and 5.0% by weight or by volume (ie when the concentration exceeds a "low concentration"). The conventional technology for contaminant recovery is to condense out the contaminants at cryogenic temperatures. Recovery of the last trace of contaminant by this energy intensive technology can be prohibitive however and thus the treated gas stream will often still contain a low concentration of contaminant which may exceed the regulated limit.

The most common method for removing and destroying low concentrations of oxidizable organic contaminants from a gas stream is thermal incineration or catalytic oxidation of the contaminants to innocuous products consisting primarily of carbon dioxide and water. The conventional thermal incineration technology is to heat the entire contaminant-containing gas stream to a high incineration temperatures (800-1400°F) before oxidizing the contaminants to innocuous products in a flare. The conventional catalytic oxidation technology requires that the entire contaminant-containing gas stream be heated to moderately high temperatures (600-800°F) before catalytically oxidizing the contaminants to innocuous products in a reactor. Both of these methods consume a large amount of energy even if a portion of the heat energy is recovered from the heated effluent gas.

U.S. Patent No. 4,025,605 by Dalton, et al (hereinafter Dalton) teaches an improvement to these conventional technologies in the context of vinyl chloride as the oxidizable organic contaminant and air as the gas stream. The improvement consists of adsorbing the contaminants onto an adsorbent prior to their catalytic oxidation which is performed in-situ. Because the contaminant is separated/adsorbed from the gas stream prior to its incineration, the entire gas stream need not be heated to the incineration temperature which results in substantial (order of magnitude) energy savings. Furthermore, because Dalton's process does not have the constraint of a very short reaction residence time associated with a flare or a conventional catalytic reactor, the residence time is not a critical variable in Dalton's process and a residence time of hours (instead of seconds) can be used. This eliminates the need for a super selective and super reactive catalyst while still obtaining a very high degree (less than 1 ppm) of contaminant removal with a moderate volume of catalyst. A long residence time also allows the use of a low (less than 400°F) incineration temperature which (1) further lowers the energy requirement, (2) allows the use of carbon-based adsorbents and (3) prevents side reactions like coking which may take place when the oxidizable organic contaminant is an aromatic or a heavy hydrocarbon.

Notwithstanding the above advantages that Dalton's process enjoys over the conventional incineration technologies, there are problems in Dalton's process when it is applied to oxidizable organic contaminants which are heavier than vinyl chloride such as butane. A first problem is water condensing in the adsorption/oxidation zone during the oxidation step. A second problem is deprivation of oxygen during the in-situ oxidation step which can be critical when the adsorbed contaminants contain a large number of carbon and hydrogen atoms. Such deprivation can also lower the oxidation rate, thereby requiring an increase in the oxidation temperature. It is an object of the present invention to overcome these problems in Dalton's process and thereby broaden its applicability and increase its efficiency.

## SUMMARY OF THE INVENTION

The present invention is a process for removing and destroying low concentrations of oxidizable organic contaminants from a gas stream comprising:

(a) passing the gas stream through a adsorption/oxidation zone filled with an adsorbent which is selective for the retention of the contaminants and which is in intimate contact with an oxidation catalyst, said passing being continued until or short of breakthrough of the contaminants from the adsorption/oxidation zone, thereby producing a stream of decontaminated gas;

(b) withdrawing a recycle stream from the void space of the adsorption/oxidation zone;

(c) adding oxygen to the recycle stream;

(d) cooling the oxygen-enriched recycle stream in order to condense out at least a portion of the water contained in the oxygen-enriched recycle stream;

(e) heating the cooled and at least partially dehydrated oxygen-enriched recycle stream;

(f) returning the heated and at least partially dehydrated oxygen-enriched recycle stream to the adsorption/oxidation zone in order to desorb and subsequently oxidize a portion of the contaminants into oxidized contaminants comprising carbon dioxide and water;

(g) repeating steps (b) through (f) until the concentration of the contaminants in the adsorption/oxidation zone has been reduced to the desired level; and

(h) regenerating the adsorption/oxidation zone.

## BRIEF DESCRIPTION OF THE DRAWINGS

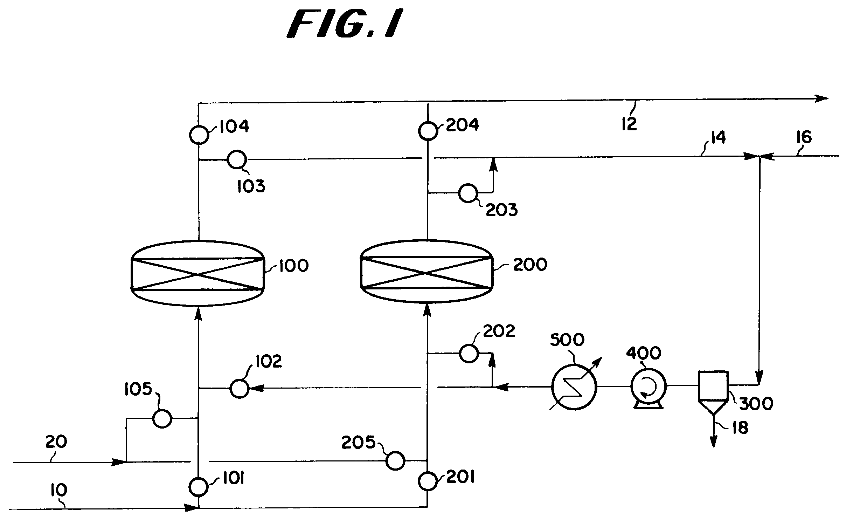

FIG. 1 is a flow diagram of one embodiment of the process of the present invention wherein the process is effected in a system comprising a plurality of adsorption/oxidation zones which each undergo their respective cycle of steps (a) through (h) while collectively operated sequentially in parallel with one another.

## DETAILED DESCRIPTION OF THE INVENTION

To better understand the present invention, it is important to understand the prior art with respect to removing and destroying low concentrations of oxidizable organic contaminants from an oxygen-containing inert gas by adsorbing the contaminants onto an adsorbent followed by an in situ catalytic oxidation of the contaminants into innocuous products. The prior art is taught in Claim 1 of US patent 4,025,605 by Dalton, et al (hereinafter Dalton) as follows:

"1. A method for removing low concentrations of oxidizable organic contaminants from an oxygen-containing inert gas which comprises:

a. adsorbing in a reaction zone having an inlet and outlet said oxidizable contaminants onto a sorptive media which is in intimate contact with an oxidation catalyst selected from the group consisting of platinum metal, palladium metal and the salts thereof or mixtures of same by passing said gas through said inlet and said sorptive media;

b. removing the resulting decontaminated gas from said outlet;

c. interrupting the passage of said oxygen-containing inert gas through said sorptive media by closing said inlet and outlet when the contaminants in said decontaminated gas reaches the desired concentration;

d. desorbing said contaminants by the application of indirect heat to said sorptive media;

e. oxidizing the desorbed contaminants in the presence of said oxidation catalyst and the oxygen in said oxygen-containing inert gas remaining in the voids of said reaction zone to innocuous reaction products;

f. venting and purging the innocuous reaction products from said reaction zone; and

g. cooling said reaction zone to ambient conditions.

Dalton's process was illustrated in the context of vinyl chloride as the oxidizable organic contaminant and air as the oxygen-containing gas. Oxygen for the oxidizing step in Dalton's process is provided from that portion of the oxygen in the air stream which becomes trapped in the voids of the reaction zone during the adsorption step. There are problems with Dalton's process, however, when it is applied to heavier oxidizable organic contaminants such as butane.

A first problem is water condensing in the adsorption/oxidation zone (ie Dalton's "reaction zone") during the oxidation step. This problem is caused by the fact that the oxidation of heavier contaminants, which contain several hydrogen atoms per molecule, produces more water than the oxidation of light contaminants. Consequently, the partial pressure of the water in the adsorption/oxidation zone builds to the point where it reaches the vapor pressure of water at the reaction conditions present and the water begins to condense in the adsorption/oxidation zone. Condensation can block the pores of the adsorbent thereby blocking further desorption of the contaminants. This is especially true where the adsorbent is relatively hydrophobic (preferred adsorbent for the system as discussed infra) and thus forces the water to remain primarily unadsorbed in the gas phase. Furthermore, this problem can occur even with respect to light contaminants such as vinyl chloride if the adsorbed concentration of the light contaminant is high enough.

It should be noted that the oxidation of heavier contaminants also produces more carbon dioxide than the oxidation of light contaminants but this will usually not pose a problem because carbon dioxide will be coadsorbed in most systems. Thus the carbon dioxide partial pressure in the void space of the system remains moderate.

The following Table 1 shows an example of the changes in the partial pressures of carbon dioxide and water during the oxidation reaction of adsorbed butane (50 ppm butane adsorbed on activated carbon from an inert gas such as air at 100°F wherein the system is subsequently heated to 300°F in the presence of an oxidation catalyst). Table 1 shows the extraordinary rise in water partial pressure (as the butane is progressively oxidized) if it is not removed from the adsorption/oxidation zone. The partial pressure of butane rises to approximately 0.203 atmospheres when the carbon bed is heated to 300°F and then gradually decreases due to oxidation of butane to form water and carbon dioxide. The vapor pressure of water at 300°F is only 4.56 atmospheres which is much only 4.56 atmospheres which is much lower than the partial pressure which the water attains during the oxidation step as shown in Table 1.

TABLE 1

| FORMATION OF WATER AND CARBON DIOXIDE DURING OXIDATION OF BUTANE | | |
|---|---|---|
| Component Partial Pressures (atmospheres) | | |
| butane | carbon dioxide | water |
| 0.020300 | 0 | 0 |
| 0.018900 | 0.25 | 2.69 |
| 0.017400 | 0.50 | 5.28 |
| 0.014400 | 1.00 | 10.34 |
| 0.011400 | 1.50 | 15.20 |
| 0.008400 | 2.00 | 19.72 |
| 0.002200 | 3.00 | 28.34 |
| 0.000066 | 3.35 | 31.15 |

A second problem in Dalton's process is deprivation of oxygen during the in-situ oxidation step. This problem is caused by the fact that more oxygen may be required for oxidizing heavier contaminants than is trapped in the voids of the reaction zone. As with the first problem, this second problem can occur even with respect to light contaminants if the adsorbed concentration of the light contaminant is high enough. Oxidation deprivation during the oxidation step can also reduce the oxidation rate of the contaminants which in turn may require a higher oxidation temperature. This problem is especially acute when Dalton's gas to be treated is non-air or is otherwise dilute in oxygen.

The present invention is an improvement to Dalton's process which overcomes the above described problems. The present invention overcomes these problems by integrating a closed loop recycle scheme into Dalton's basic process which provides for water removal and oxygen addition throughout the desorption/oxidation of the contaminants. In this way, the water never builds up to the point where it condenses and the amount of oxygen required for optimum oxidation conditions is ensured.

By this invention, it is possible to remove even trace amounts (less than 10 ppm) of oxidizable organic contaminants from gas streams. Examples of oxidizable organic contaminants to which the present invention pertains incudes virtually all hydrocarbons and halocarbons. The upper concentration limit of the contaminant safely operable in this process will be determined by the sorptive properties of the particular contaminant-adsorbent combination and the temperature of the desorption/oxidation step. That is, during desorption of the contaminant at elevated temperature, the concentration of the air-contaminant mixture in the reaction zone should not be allowed to exceed its lower explosion/flammability limit.

As noted supra, a hydrophobic adsorbent is the preferred adsorbent for the present invention. A hydrophobic adsorbent is preferred since most streams to be treated will contain water vapor, usually at saturated levels. (A hydrophilic adsorbent will allow competitive water adsorption from the gas phase and thus will significantly reduce the adsorption of organic contaminants.) Examples of hydrophobic adsorbents include carbon, charcoal and high silica zeolite.

A catalyst is necessary in the present invention for substantially complete and moderately rapid oxidation of the contaminant at relatively low temperatures. The oxidation catalyst may be impregnated or otherwise deposited onto the adsorbent. Alternatively, the catalyst may be deposited on any of the well-known catalyst supports, e.g., alumina, silica-alumina, zeolites (crystalline zeolitic aluminosilicates) and the like and the resulting supported oxidation catalyst is then admixed with the adsorbent by solids blending techniques. The catalyst may be present on the support in weights of from about 0.05 to 7% by weight of the metal. In one preferred embodiment, activated carbon may serve as both the catalyst support and the adsorbent. It may also be possible to use a layer of adsorbent followed by a layer of catalyst in the adsorption/oxidation zone. In such a case, the adsorbent will be placed at the inlet end of the adsorption/oxidation zone during the adsorption step.

The choice of the catalyst will be dictated by the nature of the contaminant. We have found that in the instant process platinum metal, palladium metal and the salts thereof have broad applicability. Furthermore, these catalysts are advantageously found to be relatively inactive toward the oxidation of the adsorbent carbon at the relatively low temperatures utilized in this process. It should be noted that the presence of water vapor in the contaminated gaseous feed is not detrimental to the reactivity of these catalysts. Indeed, in the case of palladium chloride catalysts, the presence of water vapor is preferred. This water vapor may come from the gaseous feed or may be added at some point during the oxidation.

The desorption/oxidation temperature in the present invention may be as low as 200°F. The upper limit is prescribed by the ignition temperature of the particular carbonaceous adsorbent used in the process. Since the adsorbents have an ignition temperature of about 400-750°F, the operable temperatures for this invention are in the range of from about 200-400°F. In general, the higher the reaction temperature, the more rapid is the rate of oxidation of the contaminants. However, from a practical and economic standpoint, it is preferred to perform the adsorption/oxidation step within the range of from about 250-350°F. That is, it is preferred to heat the recycle stream in step (e) to a temperature between about 250-350°F.

It should be noted that the reaction mechanism in the present invention need not be limited by catalytic oxidation alone. For example, in the case of palladium chloride catalyzed reactions of vinyl chloride monomer, hydrolysis may occur in addition to oxidation.

As with Dalton, key advantages of the present invention include (1) the fact that the entire contaminant containing stream need not be heated to the oxidation temperature and (2) the fact that the oxidation step does not have the constraint of a very short reaction residence time. This latter advantage allows a residence time of hours (instead of seconds) to be used. This eliminates the need for a super selective and super reactive catalyst while still obtaining a very high degree (less than 1 ppm) of contaminant removal with a moderate volume of catalyst. A long residence time also allows the use of a low (less than 400°F) desorption/oxidation temperature which (1) further lowers the energy requirement, (2) allows the use of carbon-based adsorbents and (3) prevents side reactions like coking which may take place when the oxidizable organic contaminant is an aromatic or a heavy hydrocarbon.

Figure 1 is a flow diagram of one embodiment of the process of the present invention wherein the process is effected in a system comprising a plurality of adsorption/oxidation zones which each undergo their respective cycle of steps (a) through (h) while collectively operated sequentially in parallel with one another. Referring now to Figure 1, the system components comprise adsorption/oxidation zones 100 and 200, gas cooler/water condenser 300, circulating gas pump 400, gas heater 500 and switch valves 101 through 105 and 201 through 205. The contaminant containing feed gas stream 10 is initially passed through adsorption/oxidation zone 100 which is filled with an adsorbent which is selective for the retention of the contaminants and which is in intimate contact with an oxidation catalyst (step a). Such passing is typically performed at near ambient temperature and is continued until or short of breakthrough of the contaminants from zone 100, thereby producing a stream of decontaminated gas in stream 12. At this point, the contaminated containing feed gas stream 10 is switched to adsorption/reaction zone 200 which is operated sequentially in parallel with zone 100 in order to maintain continuity of feed gas treatment. Also at this point, a recycle stream 14 is withdrawn from the void space of zone 1 (step b), enriched with oxygen from stream 16 (step c), cooled in gas cooler/water condenser 300 in order to condense out at least a portion of its water in stream 18 (step d), heated in heater 500 to the desired desorption/oxidation temperature (step e) and finally returned to zone 100 in order to desorb and subsequently oxidize a portion of the contaminants into oxidized contaminants comprising carbon dioxide and water (step f). This recycle loop consisting of steps (b) through (f) is repeated until the concentration of the contaminants in zone 100 has been reduced to the desired level (step g). (Circulating gas pump 400 is utilized for the circulation of recycle stream 14.) After step (g), zone 100 is regenerated by passing ambient air stream 20 through zone 100 in order to cool the adsorption/oxidation zone back down to near ambient temperature and simultaneously sweep from the adsorption/reaction zone substantially all of the gas, adsorbed or otherwise, remaining in zone 100 (step h).

(Alternatively, regeneration could be accomplished by venting and continuing to circulate the gas through the recycle loop but with heater 500 turned off.) After the regeneration of zone 100, the cycle is complete and a new cycle of steps (a) through (h) can commence. The following Table 2 summarizes Figure 1's zone operations and valve sequencing during a complete cycle.

### TABLE 2

| Time Interval | Zone Operation* | | ....... | Valve | Position | (o=open; | c=closed) | ....... | | | |
|---|---|---|---|---|---|---|---|---|---|---|---|
| | 100 | 200 | 101 | 102 | 103 | 104 | 105 | 201 | 202 | 203 | 204 | 205 |
| 0-15 | a | b-g | o | c | c | o | c | c | o | o | c | c |
| 15-16 | a | h | o | c | c | o | c | c | c | c | o | o |
| 16-31 | b-g | a | c | o | o | c | c | o | c | c | o | c |
| 31-32 | h | a | c | c | c | o | o | o | c | c | o | c |

```
*  a = step (a) as described above and as defined in Claim 1
   b-g = steps (b) through (g) as described above and as defined in Claim 1
   h = step (h) as described above and as defined in Claims 2 and 3
```

The present invention has been described with reference to a specific embodiment thereof. This embodiment should not be seen as a limitation of the scope of the present invention; the scope of such being ascertained by the following claims.

**Claims**

1. A process for removing and destroying low concentrations of oxidizable organic contaminants from a gas stream comprising:

   (a) passing the gas stream through a adsorption/oxidation zone filled with an adsorbent which is selective for the retention of the contaminants and which is in intimate contact with an oxidation catalyst, said passing being continued until or short of breakthrough of the contaminants from the adsorption/oxidation zone, thereby producing a stream of decontaminated gas;

   (b) withdrawing a recycle stream from the void space of the adsorption/oxidation zone;

   (c) adding oxygen to the recycle stream;

   (d) cooling the oxygen-enriched recycle stream in order to condense out at least a portion of the water contained in the oxygen-enriched recycle stream;

   (e) heating the cooled and at least partially dehydrated oxygen-enriched recycle stream;

   (f) returning the heated and at least partially dehydrated oxygen-enriched recycle stream to the adsorption/oxidation zone in order to desorb and subsequently oxidize a portion of the contaminants into oxidized contaminants comprising carbon dioxide and water; and

   (g) repeating steps (b) through (f) until the concentration of the contaminants in the adsorption/oxidation zone has been reduced to the desired level.

2. The process of Claim 1 wherein subsequent to step (g), the process further comprises:

   (h) regenerating the adsorption/oxidation zone.

3. The process of Claim 2 wherein subsequent to step (h), steps (a) through (h) are performed as a continually repeating cycle of steps.

4. The process of Claim 3 wherein the process is effected in a system comprising a plurality of adsorption/oxidation zones which each undergo their respective cycle of steps while collectively operated sequentially in parallel with one another.

5. The process of Claim 2 wherein step (h)'s regeneration step comprises passing a stream of ambient air through the adsorption/oxidation zone in order to cool the adsorption/oxidation zone and simultaneously sweep from the adsorption/reaction zone substantially all of the gas, adsorbed or otherwise, remaining in the adsorption oxidation zone.

6. The process of Claim 1 wherein the adsorbent in selected from the group consisting of carbon, charcoal and high silica zeolite and wherein the oxidation catalyst is selected from the group consisting of platinum metal, palladium metal, the salts thereof and mixtures of same.

7. The method of Claim 1 wherein the oxidation catalyst is deposited on an alumina support.

8. The method of Claim 1 wherein the catalyst is deposited on a carbon support which carbon support also serves as the adsorbent.

9. The method of Claim 1 wherein step (e) comprises heating the recycle stream to a temperature between 250-350°F.

10. The method of Claim 1 wherein the oxidizable organic contaminant is present in the gas stream in a concentration of up to about 5% based by weight.

# FIG.1

EP 0 599 271 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| D,Y | FR-A-2 310 150 (AIR PRODUCTS AND CHEMICALS)<br>& US-A-4 025 605 (AIR PRODUCTS AND CHEMICALS)<br>* claims; figure 1 * | 1-5 | B01D53/36 |
| D,A | | 6,7,10 | |
| | --- | | |
| Y | DE-A-40 03 668 (SIEMENS)<br>* column 3, line 23 - column 5, line 63; figure 1 * | 1-5 | |
| | --- | | |
| P,A | WO-A-93 05864 (CALGON CARBON CORPORATION)<br>1 April 1993 | | |
| | --- | | |
| A | GB-A-2 252 968 (NIKKI-UNIVERSAL)<br>----- | | |
| | | | **TECHNICAL FIELDS SEARCHED** (Int.Cl.5) |
| | | | B01D |

The present search report has been drawn up for all claims

| Place of search | Date of completion of the search | Examiner |
|---|---|---|
| THE HAGUE | 3 March 1994 | Bogaerts, M |

EPO FORM 1503 03.82 (P04C01)